# EUROPEAN PATENT APPLICATION

(11) **EP 4 742 337 A1**
(43) Date of publication of application: **13.05.2026**
(21) Application number: 25211277.6
(22) Date of filing: 27.10.2025
(51) Int. Cl.: H01M 10/02, H01M 10/04, H01M 4/04, B05C 11/02, H01M 4/139

(54) **ELECTRODE SHEET MANUFACTURING DEVICE AND METHOD FOR MANUFACTURING ELECTRODE SHEET**

(30) Priority: 07.11.2024 JP 2024194837
(71) Applicant: Prime Planet Energy & Solutions, Inc., Tokyo 103-0022 (JP)
(72) Inventor: UMINO, Daichi, Tokyo, 103-0022 (JP); NAKAI, Haruya, Tokyo, 103-0022 (JP)
(74) Representative: Kuhnen & Wacker Patent- und Rechtsanwaltsbüro PartG mbB

(57) **Abstract**

An electrode sheet manufacturing device includes a conveyance device, a first press device, a second press device, and a stepped roll pressing device. The first press device is a device that roll-presses a non-formed portion of an electrode sheet by a pair of rubber rolls. At least one of the pair of rubber rolls includes a shaft and an elastic body. A diameter of the shaft in a portion thereof that presses a boundary portion between the non-formed portion and the electrode active material layer is larger than a diameter of the shaft in a portion thereof that presses a more outer side than the boundary portion. A thickness of the elastic body in the portion thereof that presses the boundary portion is smaller than a thickness of the elastic body in the portion thereof that presses the more outer side than the boundary portion.

## Description

### BACKGROUND

The present disclosure relates to an electrode sheet manufacturing device and a method for manufacturing an electrode sheet.

Japanese Laid-open Patent Publication No. 2023-036089 discloses a method for manufacturing an electrode, the method including a coated portion pressing step of pressing a coated portion provided on a metal foil in a thickness direction and a non-coated portion pressing step of pressing a non-coated portion in the thickness direction.

### SUMMARY

Incidentally, the present inventors found that there is a phenomenon that, in roll-pressing the electrode sheet, even when the non-coated portion is pressed by a pair of elastic rolls, wrinkles are generated in the electrode sheet.

An electrode sheet manufacturing device disclosed herein is a manufacturing device that manufactures an electrode sheet including a current collector, a non-formed portion, and an electrode active material layer. The current collector is formed of a long metal foil. The non-formed portion is set along a length direction in a preset position of the current collector in a width direction. The electrode active material layer is formed in a portion of the current collector excluding the non-formed portion. The electrode sheet manufacturing device includes a conveyance device, a first press device, a second press device, and a roll pressing device. The conveyance device conveys the electrode sheet along a preset conveyance path. The first press device is arranged on the conveyance path and roll-presses the non-formed portion of the electrode sheet by a pair of rubber rolls. The second press device is arranged at a downstream side of the first press device on the conveyance path and roll-presses the electrode active material layer. The stepped roll pressing device is arranged at a downstream side of the second press device on the conveyance path and presses a stepped roll against the non-formed portion of the electrode sheet to apply a tension thereto. The stepped roll includes a step in a portion thereof that contacts a boundary portion of the non-formed portion that is a boundary with the electrode active material layer. In the stepped roll, a diameter of a portion thereof that contacts the non-formed portion is larger than a diameter of a portion thereof that contacts the electrode active material layer. At least one of the pair of rubber rolls includes a shaft and an elastic body wound around the shaft. In the at least one of the pair of rubber rolls, a diameter of the shaft in a portion thereof that presses the boundary portion between the non-formed portion and the electrode active material layer is larger than a diameter of the shaft in a portion thereof that presses a more outer side than the boundary portion. In the at least one of the pair of rubber rolls, a thickness of the elastic body in the portion thereof that presses the boundary portion is smaller than a thickness of the elastic body in the portion thereof that presses the more outer side than the boundary portion.

According to the electrode sheet manufacturing device described above, wrinkles of the electrode sheet are likely to be suppressed.

### BRIEF DESCRIPTION OF THE DRAWINGS

FIG. 1 is a flowchart of manufacturing in a method for manufacturing an electrode sheet.
FIG. 2 is a schematic view of an electrode sheet 10.
FIG. 3 is a schematic view illustrating another embodiment of the electrode sheet 10.
FIG. 4 is a schematic view illustrating an example of a roll-pressing step S6 proposed herein.
FIG. 5 is a schematic view of a first press device 104.
FIG. 6 is a schematic view illustrating a stepped roll pressing step S6c.
FIG. 7 is a schematic view illustrating stretch of the electrode sheet 10 that is roll-pressed in a first pressing step S6a.
FIG. 8 is a schematic view illustrating stretch of a current collector 12.

### DETAILED DESCRIPTION OF THE EMBODIMENTS

Embodiments of a technology disclosed herein will be described below with reference to the accompanying drawings. As a matter of course, the embodiments described herein are not intended to be particularly limiting the present disclosure. The accompanying drawings are schematic and do not necessarily reflect actual members or portions. Members/portions that have the same effect will be denoted by the same sign as appropriate, and the overlapping description will be omitted as appropriate. As used herein, the expression "X to Y" that indicates a numerical value range means "equal to or more than X and equal to or less than Y," unless specifically stated otherwise.

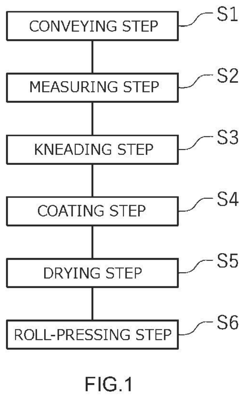

FIG. 1 is a flowchart of manufacturing in a method for manufacturing an electrode sheet. As illustrated in FIG. 1, the method for manufacturing an electrode sheet includes a conveying step S1, a measuring step S2, a kneading step S3, a coating step S4, a drying step S5, and a roll-pressing step S6. However, the method for manufacturing an electrode sheet may include some other step.

### <Electrode Sheet 10>

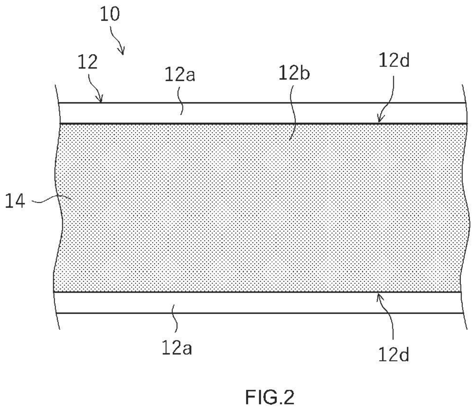

FIG. 2 is a schematic view of an electrode sheet 10. The electrode sheet 10 forms a positive electrode sheet or a negative electrode sheet of an electrode body that is stored in an electricity storage device. The term "electricity storage device" refers to a device that can be charged and discharged repeatedly, and expresses a concept encompassing so-called storage batteries (that is, chemical batteries), such as lithium-ion secondary batteries, nickel-hydrogen batteries, nickel-cadmium batteries, or the like, as well as capacitors (that is, physical batteries), such as electrical double-layer capacitors or the like.

As illustrated in FIG. 2, the electrode sheet 10 includes a current collector 12 and an electrode active material layer 14. The current collector 12 is a member formed of a metal foil. The current collector 12 is a long band-like metal member. As the current collector 12, a metal material having a desired conductivity can be used. As a positive electrode current collecting foil, for example, aluminum, an aluminum alloy, or the like can be used. As a negative electrode current collecting foil, for example, copper, a copper alloy, or the like can be used. A portion of the current collector 12 in a preset position is coated with the electrode active material layer 14. The electrode active material layer 14 is formed at least on one surface of the band-like current collector 12. In this embodiment, the electrode active material layer 14 is formed on both surfaces of the current collector 12. The electrode active material layer 14 is a layer including an electrode active material. As a positive electrode active material, for example, a lithium transition metal composite material can be used. As a negative electrode active material, for example, a carbon material, a silicon-based material, mixed oxides thereof, or the like can be used. The electrode active material layer may include an additive, such as a binder, a conductive material, or the like, other than the electrode active material.

The electrode sheet 10 is formed by applying an electrode mixture slurry that is to be the electrode active material layer 14 to the current collector 12 and drying the applied electrode mixture slurry. A non-coated portion 12a (non-formed portion) and a coated portion 12b are set in the current collector 12. The non-coated portion 12a is a portion of the current collector 12 that is not coated with the electrode active material layer 14. The non-coated portion 12a is set along a length direction in an end portion of the electrode sheet 10 in a width direction. In this embodiment, the non-coated portion 12a is set at each of both ends of the electrode sheet 10 in the width direction. The coated portion 12b is arranged between the both ends of the electrode sheet 10. The electrode mixture slurry is applied to the coated portion 12b. Thus, the electrode active material layer 14 is formed on the coated portion 12b of the current collector 12. That is, the electrode active material layer 14 is arranged between the non-coated portions 12a at the both ends of the electrode sheet 10 in the width direction. As described above, the electrode sheet 10 may include the current collector 12 formed of a long metal foil, the non-formed portion (herein, the non-coated portion 12a) set along the length direction in a preset position of the current collector 12 in the width direction, and the electrode active material layer 14 formed in a portion of the current collector 12 excluding the non-formed portion.

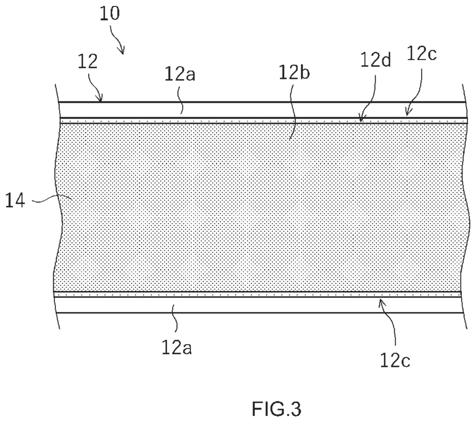

FIG. 3 is a schematic view illustrating another embodiment of the electrode sheet 10. In the electrode sheet 10, as illustrated in FIG. 3, an insulating protective film 12c can be provided in a position that is adjacent to the coated portion 12b in the non-coated portion 12a. The structure described above can be employed, for example, for the electrode sheet 10 that can be used for a positive electrode. Since the protective film 12c described above is provided in the electrode sheet 10 used for a positive electrode, a short circuit between the positive electrode current collecting foil and the negative electrode current collecting foil can be prevented. The protective film 12c described above includes an insulating inorganic filler. Examples of the inorganic filler includes insulating particles, for example, ceramic particles, such as alumina or the like. The protective film 12c may include, for example, a binder. The binder may be the same as the binder described above that the positive electrode active material layer may include. In the following description, even when not specifically stated, FIG. 2 and FIG. 3 should be referred to for description of the components of the electrode sheet 10.

### <Conveying Step S1, Measuring Step S2, Kneading Step S3, Coating Step S4, and Drying Step S5>

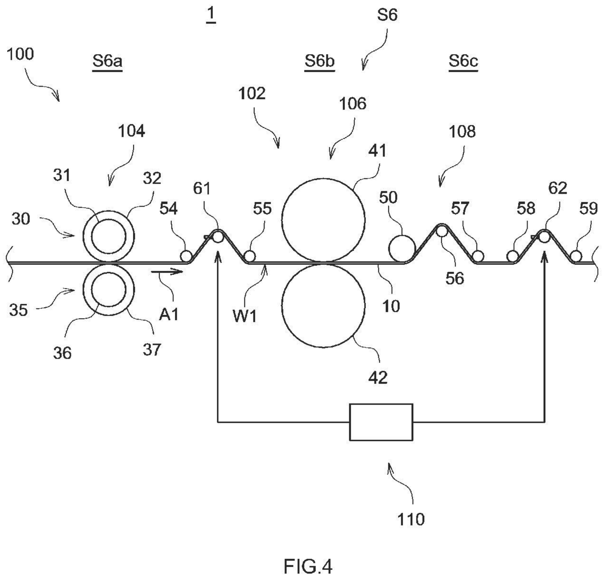

In a conveying step S1 illustrated in FIG. 1, the electrode sheet 10 is conveyed. In the conveying step S1, the electrode sheet 10 is conveyed along a preset conveyance path W1 (see FIG. 4). In the measuring step S2, raw materials of the electrode active material layer 14 (see FIG. 2) are measured. The measuring can be realized, for example, by a measuring device (not illustrated) including a balance, a load cell, or the like. The measured raw materials of the electrode active material layer 14 are mixed in the kneading step S3. The kneading step S3 can be realized by a kneading device (not illustrated). The materials of the electrode active material layer 14 that have been made into a slurry state by the kneading device are applied to the current collector 12 (see FIG. 2) in the coating step S4. The coating step S4 can be realized by, for example, a coating device (not illustrated), such as a slit coater, a gravure coater, a die coater, a comma coater, or the like. In the drying step S5, the applied row material of the electrode active material layer 14 in a slurry state is dried. The drying step S5 can be realized by, for example, a drying device (not illustrated) that emits a hot air, an infrared ray.

### <Roll-pressing Step S6>

A roll-pressing step S6 is a step of roll-pressing the electrode sheet 10. Herein, a base material of the electrode sheet 10 is a metal foil. The electrode sheet 10 includes a portion (the coated portion 12b) in which the electrode active material layer 14 is formed and a portion (non-coated portion 12a) in which the electrode active material layer 14 is not formed. An object of the roll-pressing step S6 is mainly to adjust the electrode active material layer 14 formed by coating to a proper density.

In the roll-pressing step S6, in order to cause the electrode active material layer 14 to have a proper density, the coated portion 12b is roll-pressed. When the coated portion 12b is roll-pressed, in the coated portion 12b, the current collector 12 of the base material stretches, but a pressure of press is not directly transferred in the non-coated portion 12a and the current collector 12 of the base material is difficult to be stretched. Therefore, when only the coated portion 12b is pressed, a variation in stretch of the current collector 12 can occur between the coated portion 12b and the non-coated portion 12a. A large variation in stretch of the current collector 12 between the coated portion 12b and the non-coated portion 12a can be a cause of generation of wrinkles in the electrode sheet 10. The non-coated portion 12a is cut into a predetermined shape in a later step and thus tabs are formed. At this time, when wrinkles are generated in a boundary portion 12d of the non-coated portion 12a that is a boundary with the electrode active material layer 14, the tabs are not formed into a proper shape in some cases.

In order to prevent generation of wrinkles, the current collector 12 may be stretched at the non-coated portion 12a before or after roll-pressing the coated portion 12b. As a technology used for stretching the current collector 12 at the non-coated portion 12a, there is a technology in which the non-coated portion 12a is pressed by a rubber roll. The technology in which the non-coated portion 12a is pressed by a rubber roll is referred to as elasticity powered stretching (EPS), as appropriate. A device that presses the non-coated portion 12a by a rubber roll can be referred to as an EPS device, as appropriate.

Incidentally, the present inventors found a phenomenon that, even when the non-coated portion 12a is stretched by EPS before and after roll-pressing, wrinkles are generated in the electrode sheet 10. Wrinkles are generated in particular in the boundary portion 12d of the non-coated portion 12a that is the boundary with the electrode active material layer 14. Regarding the phenomenon, the present inventors obtained knowledge that, in stretching the non-coated portion 12a by EPS, the boundary portion 12d of the non-coated portion 12a that is the boundary with the electrode active material layer 14 cannot be stretched properly and this is a cause of the phenomenon.

That is, the electrode active material layer 14 is formed on the coated portion 12b. The electrode active material layer 14 is a layer to which a metal oxide, such as a lithium transition metal complex oxide, is applied. When the rubber roll of EPS is pressed against the electrode active material layer 14, this pressing becomes a cause of peeling off of the electrode active material layer 14. On this view, in EPS, a position of the rubber roll is set such that the rubber roll does not contact the coated portion 12b. As a result, in EPS, a boundary between the non-coated portion 12a and the coated portion 12b and a portion therearound are difficult to be stretched. Moreover, a protective layer including an inorganic filler is formed at the boundary between the non-coated portion 12a and the coated portion 12b in some cases. In a case where the protective film is formed, when the rubber roll of EPS is pressed thereto, respective stretching rates of a portion on which the protection layer is formed and a portion in which the protection layer is not formed do not match in some cases.

As described above, when the non-coated portion 12a is stretched by EPS, it is difficult to properly stretch the boundary portion 12d of the non-coated portion 12a that is the boundary with the electrode active material layer 14. The present inventors think that, as a result, a distortion is left in the boundary portion 12d and wrinkles are garnered in the electrode sheet.

FIG. 4 is a schematic view illustrating an example of the roll-pressing step S6 proposed herein. The roll-pressing step S6 includes a first pressing step S6a, a second pressing step S6b, and a stepped roll pressing step S6c, as illustrated in FIG. 4.

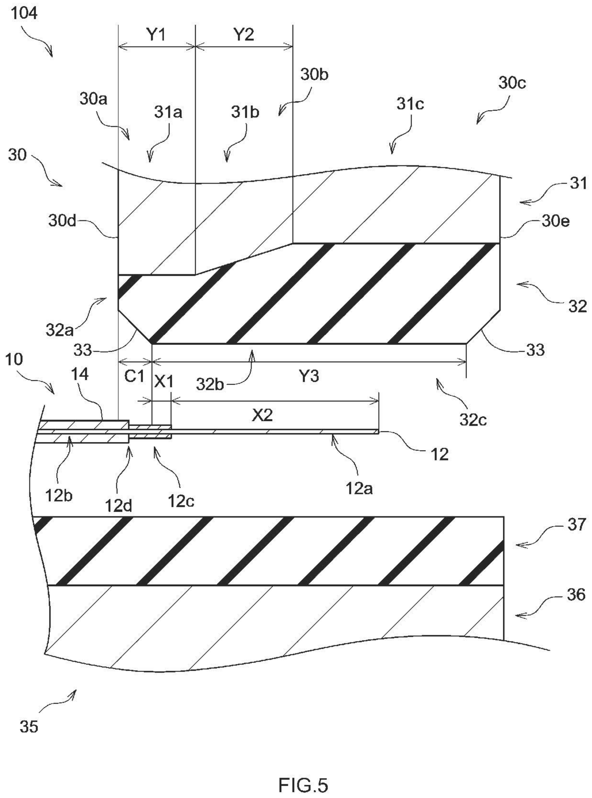

The first pressing step S6a is EPS described above and is a step of stretching the non-coated portion 12a of the electrode sheet 10. FIG. 5 is a schematic view of the first press device 104. In FIG. 5, the electrode sheet 10 and a pair of rubber rolls 30 and 35 are virtually separated from each other. In FIG. 5, cross sections of the electrode sheet 10 and the pair of rubber rolls 30 and 35 are schematically illustrated. The first pressing step S6a is performed by the first press device 104. The first pressing step S6a is a step of roll-pressing the non-coated portion 12a of the electrode sheet 10 by the pair of rubber rolls 30 and 35 while conveying the electrode sheet 10 along a preset conveyance path, as illustrated in FIG. 5. Herein, the pair of rubber rolls 30 and 35 are roll-pressed in a state where a tension is applied thereto. Although not particularly limited, a tension given to the electrode sheet 10 at front and behind the pair of rubber rolls 30 and 35 is 150 N to 250 N and, for example, can be about 170 N to 230 N (in this embodiment, about 200 N).

The rubber rolls 30 and 35 may be roll members configured such that a corresponding one of elastic bodies 32 and 37 is arranged on a corresponding one of shafts 31 and 36. The elastic bodies 32 and 37 used for the rubber rolls 30 and 35 may be of an elastic material having a necessary young's modulus. As the elastic bodies 32 and 37, a resin, such as rubber, urethane, or the like, can be used. In the first pressing step S6a, the non-coated portion 12a is pressed by the rubber rolls 30 and 35 and receives a reaction force of elastic deformation and compressive deformation of the rubber rolls, so that a portion thereof pressed by the rolls is pulled and stretched.

The second pressing step S6b is a step of roll-pressing the electrode active material layer 14 (the coated portion 12b) of the electrode sheet 10 after the first pressing step S6a, as illustrated in FIG. 4. This step is a step of adjusting the electrode active material layer 14 (the coated portion 12b) to a necessary density. In the second pressing step S6b, as illustrated in FIG. 4, the electrode sheet 10 is sandwiched between a pair of rolls 41 and 42, so that the electrode active material layer 14 is compressed. At this time, the current collector 12 that is a base material is pressed and stretched in a portion (the coated portion 12b) on which the electrode active material layer 14 is formed.

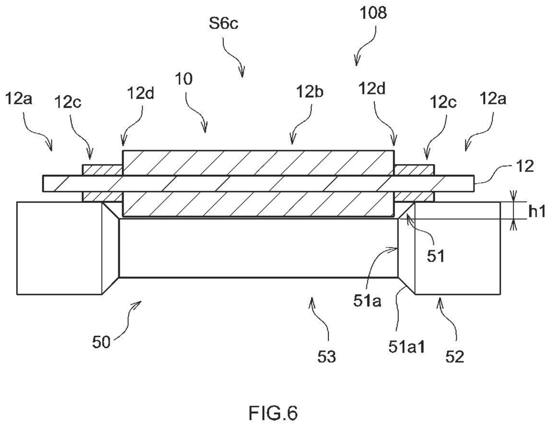

The stepped roll pressing step S6c is a step of pressing a stepped roll 50 against the non-coated portion 12a of the electrode sheet 10 to apply a tension thereto after the first pressing step S6a. FIG. 6 is a schematic view illustrating the stepped roll pressing step S6c.

### <Stepped Roll 50>

The stepped roll 50 used in the stepped roll pressing step S6c described above includes a step 51a in a portion 51 that contacts the boundary portion 12d of the non-coated portion 12a that is the boundary with the electrode active material layer 14, as illustrated in FIG. 6. A diameter of a portion 52 that contacts the non-coated portion 12a is larger than a diameter of a portion 53 that contacts the electrode active material layer 14. In a form illustrated in FIG. 6, the diameter of the portion 52 that contacts the non-coated portion 12a may be a uniform diameter. The diameter of the portion 53 that contacts the electrode active material layer 14 is also a uniform diameter.

Herein, the boundary portion 12d of the non-coated portion 12a that is the boundary with the electrode active material layer 14 can be an area of the non-coated portion 12a of the electrode sheet 10 at the boundary between the electrode active material layer 14 and the non-coated portion 12a and near the boundary. The boundary portion 12d of the non-coated portion 12a that is the boundary with the electrode active material layer 14 can be defined as a portion where the current collector 12 that is a base material is difficult to be stretched in the first pressing step S6a in which the non-coated portion 12a is pressed and stretched and the second pressing step S6b in which the electrode active material layer 14 is roll-pressed. The boundary portion 12d of the non-coated portion 12a that is the boundary with the electrode active material layer 14 can be defined in accordance with a specification and a manufacturing step of the electrode sheet 10. A width of the boundary portion 12d of the non-coated portion 12a that is the boundary with the electrode active material layer 14 can be, for example, about 3 to 7 mm (for example, about 5 mm). The protective film 12c may be formed on the boundary portion 12d of the non-coated portion 12a that is the boundary with the electrode active material layer 14, as illustrated in FIG. 3.

As illustrated in FIG. 6, the step 51a is provided in the portion 51 that contacts the boundary portion 12d of the non-coated portion 12a that is the boundary with the electrode active material layer 14. In the form illustrated in FIG. 6, a height of the step 51a may be set to about a height that allows the boundary portion 12d of the non-coated portion 12a that is the boundary with the electrode active material layer 14 to contact the step 51a and to be stretched when the electrode sheet 10 is wound around the stepped roll 50 and is conveyed. On this view, the height of the step 51a also depends on the specification of the electrode sheet 10 (for example, a thickness of the current collector 12, a thickness of the electrode active material layer 14 of the coated portion 12b, or the like). When the electrode sheet 10 is wound around the stepped roll 50 and is conveyed, a tension is given to the electrode sheet 10. The tension given to the electrode sheet 10 is 80 N to 200 N and can be, for example, about 100 N to 160 N (in this embodiment, about 140 N). In this embodiment, a tension applied to the non-coated portion 12a when the stepped roll 50 is pressed against the non-coated portion 12a is set to a smaller tension than a tension applied to the non-coated portion 12a at front and behind the pair of rubber rolls 30 and 35 (see FIG. 4).

Herein, the height h1 of the step 51a is defined as a distance between a portion that contacts the coated portion 12b and a portion that contacts the non-coated portion 12a in a diameter direction of the stepped roll 50. Although not particularly limited, the height h1 of the step 51a may be, for example, 0.25 mm or more and 1.50 mm or less. The height h1 of the step 51a may be 3.00 mm or less. The step 51a is configured of an inclined surface 51a1 that is inclined uniformly with respect to an axial direction of the stepped roll 50. An inclination angle of the inclined surface 51a1 may be, for example, 15 degrees or more and 45 degrees or less, and preferably 30 degrees with respect to the axial direction of the stepped roll 50. At a start point and an end point of the inclined surface 51a1, R-chamfering may be performed thereon and, for example, R-chamfering with R = 2.5 is preferably performed thereon.

### <Method For Manufacturing Electrode Sheet>

In a method for manufacturing the electrode sheet 10 disclosed herein, as illustrated in FIG. 4, the first pressing step S6a, the second pressing step S6b, and the stepped roll pressing step S6c are performed in this order.

In the first pressing step S6a, an EPS device that presses the non-coated portion 12a by the rubber rolls 30 and 35 may be used. In this case, position and pressing forces of the rubber rolls 30 and 35 may be adjusted in the EPS device such that the non-coated portion 12a is pressed by the rubber rolls 30 and 35. A position of the electrode sheet 10 that is conveyed toward the EPS device may be adjusted such that a position of the non-coated portion 12a matches with those of the rubber rolls 30 and 35 of the EPS device. In the stepped roll pressing step S6c, the position of the electrode sheet 10 may be adjusted with respect to the stepped roll 50 such that the step 51a of the stepped roll 50 contacts the boundary portion 12d of the non-coated portion 12a that is the boundary with the electrode active material layer 14. In this embodiment, the stepped roll 50 is configured such that the portion thereof that contacts the non-coated portion 12a is thick. Therefore, in the stepped roll pressing step S6c, the non-coated portion 12a that has been stretched already in the first pressing step S6a is supported by the stepped roll 50.

### <Electrode Sheet Manufacturing Device 1>

The electrode sheet manufacturing device 1 that embodies a method for manufacturing an electrode sheet described above includes a roll-press unit 100 that roll-presses the band-like electrode sheet 10, as illustrated in FIG. 4. The roll-press unit 100 includes a conveyance device 102, the first press device 104, a second press device 106, and a stepped roll pressing device 108. The roll-press unit 100 may include guide rolls 54 to 59 and tension rolls 61 and 62. Note that there is no particular limitation on positions of the guide rolls 54 to 59 and the tension rolls 61 and 62. In the embodiment illustrated in FIG. 4, the stepped roll pressing device 108 includes one stepped roll 50, but the stepped roll pressing device 108 is not limited thereto. Multiple (although not particularly limited, for example, three) stepped rolls 50 may be provided in the stepped roll pressing device 108. When multiple stepped rolls 50 are provided in the stepped roll pressing device 108, a guide roll may be provided between adjacent ones of the stepped rolls 50 on the conveyance path W1. The number of the stepped rolls 50 can be set in accordance with a target stretching rate of the current collector 12, quality of the finished electrode sheet 10, or the like, as appropriate.

### <Conveyance Device 102>

The conveyance device 102 is a device that conveys the electrode sheet 10 along the preset conveyance path W1. Details of the conveyance device 102 are omitted, but the conveyance device 102 may be a device that conveys the electrode sheet 10 along the conveyance path W1. Although not illustrated, the conveyance device 102 may include a mechanism that sends out the electrode sheet 10 along the conveyance path W1, a guide roll that sends the electrode sheet 10 along the conveyance path W1, a tension adjustment mechanism that gives a necessary tension to the electrode sheet 10, a mechanism that winds the electrode sheet 10 that has been conveyed along the conveyance path W1, or the like.

### <First Press Device 104>

The first press device 104 is a device that is arranged on the conveyance path W1 and roll-presses the non-coated portion 12a of the electrode sheet 10 by the pair of rubber rolls 30 and 35. For the first press device 104, as described above, the EPS device that presses the non-coated portion 12a by the pair of rubber rolls 30 and 35 may be used. In the EPS device, positions and pressing forces of the rubber rolls 30 and 35 may be adjusted such that the non-coated portion 12a is pressed by the rubber rolls 30 and 35. The first press device 104 may include a position adjustment device (not illustrated) that adjusts the position of the electrode sheet 10 that is conveyed toward the EPS device such that the position of the non-coated portion 12a matches with those of the rubber rolls 30 and 35 of the EPS device.

As illustrated in FIG. 5, the pair of rubber rolls 30 and 35 include an upper roll 30 and a lower roll 35. Respective rotation shafts of the upper roll 30 and the lower roll 35 are approximately in parallel to each other. The upper roll 30 and the lower roll 35 may be configured such that one of the upper roll 30 and the lower roll 35 is drivable with respect to the other one of the upper roll 30 and the lower roll 35. In this embodiment, the upper roll 30 is pressed against the lower roll 35. Thus, the pair of rubber rolls 30 and 35 roll-press the electrode sheet 10.

### <Lower Roll 35>

The lower roll 35 is a columnar roll arranged below the electrode sheet 10. In the axial direction, a dimension of the lower roll 35 is longer than a dimension of the electrode sheet 10 in the width direction of the electrode sheet 10. An end portion of the lower roll 35 protrudes outward from the electrode sheet 10. The lower roll 35 is in contact with the non-coated portion 12a of the current collector 12 and the electrode active material layer 14 and supports an entire surface of the electrode sheet 10 in the width direction of the electrode sheet 10 from below. Note that the lower roll 35 does not necessarily need to support the entire electrode sheet 10 but may be configured to support only the non-coated portion 12a of the electrode sheet 10.

The lower roll 35 includes the shaft 36 and the elastic body 37. In this embodiment, the shaft 36 has an approximately columnar shape and has an approximately constant radius along the length direction. The elastic body 37 is wound around the shaft 36. A length of the elastic body 37 is approximately the same as a length of the shaft 36. Although not particularly limited, a thickness of the elastic body 37 can be set to about 5 mm or more and 20 mm or less (for example, about 8 mm or more and 16 mm or less). The elastic body 37 has an approximately cylindrical shape and has an approximately constant thickness in a circumferential direction and the length direction. Therefore, the radius of the lower roll 35 is approximately constant along the length direction. The upper roll 30 is provided above the lower roll 35.

### <Upper Roll 30>

The upper roll 30 is a disk-shaped roll that is arranged above the electrode sheet 10. The upper roll 30 is arranged in a position where the upper roll 30 can press the non-coated portion 12a of the electrode sheet 10. An inner end portion 30d of the upper roll 30 can be arranged around the boundary between the non-coated portion 12a and the coated portion 12b. In this embodiment, the inner end portion 30d of the upper roll 30 is arranged in a position corresponding to an end portion of the electrode active material layer 14. The inner end portion 30d of the upper roll 30 is set in a position that slightly overlaps with the coated portion 12b. The upper roll 30 is set to a dimension that allows the upper roll 30 to press the non-coated portion 12a of the electrode sheet 10. A width of the upper roll 30 (a dimension thereof in the axial direction) is larger than a width of the non-coated portion 12a of the electrode sheet 10. An outer end portion 30e of the upper roll 30 protrudes outward from an end portion of the non-coated portion 12a. There is no particular limitation on the width of the upper roll 30, and the width of the upper roll 30 can be set to a dimension with which the upper roll 30 does not protrude outward from the lower roll 35.

The upper roll 30 includes the shaft 31 and the elastic body 32. In this embodiment, the shaft 31 has an approximately disk-like shape and has an approximately constant radius along the length direction. The elastic body 32 is wound around the shaft 31. A length of the elastic body 32 is approximately the same as a length of the shaft 31. The elastic body 32 has an approximately cylindrical shape and has an approximately constant thickness in the circumferential direction and the length direction, except for end portions 33. A corner portion of each of both the end portions 33 has a shape obtained by performing so-called C-chamfering. The corner portion of each of the end portions 33 is inclined continuous in the circumferential direction. Note that there is no particular limitation on the shape of each of the end portions 33 and each of the end portions 33 may have a shape with a continuous R-chamfered portion in the circumferential direction. Each of the end portions 33 may have a shape that has not been chamfered and a corner portion of which is approximately right-angled. In this embodiment, C-chamfering in which a dimension in the axial direction is C1 (see FIG. 5) has been performed on each of both the end portions 33. An angle in C-chamfering can be 30 degrees to 60 degrees. In this embodiment, an angle in C-chamfering is about 40 degrees.

The upper roll 30 includes a first portion 30a, a second portion 30b, and a third portion 30c in this order from the inner end portion 30d toward the outer end portion 30e. The first portion 30a is a potion that presses the boundary portion 12d between the non-coated portion 12a and the electrode active material layer 14. The second portion 30b and the third portion 30c are portions that press a portion of the current collector 12 located at a more outer side than the boundary portion 12d. Therefore, the first portion 30a is arranged at a position that overlaps with the boundary portion 12d of the electrode sheet 10. The second portion 30b and the third portion 30c are arranged at the more outer side than the boundary portion 12d of the electrode sheet 10. Each of the shaft 31 and the elastic body 32 includes portions corresponding to the first portion 30a, the second portion 30b, and the third portion 30c of the electrode sheet 10.

The shaft 31 includes a first portion 31a, a second portion 31b, and a third portion 31c. The second portion 31b is continuous to an outer end portion of the first portion 31a in the axial direction. The third portion 31c is continuous to an outer end portion of the second portion 31b in the axial direction. The elastic body 32 includes a first portion 32a, a second portion 32b, and a third portion 32c. The second portion 32b is continuous to an outer end portion of the first portion 32a in the axial direction. The third portion 32c is continuous to an outer end portion of the second portion 32b in the axial direction. The first portion 32a, the second portion 32b, and the third portion 32c of the elastic body 32 are wound around the first portion 31a, the second portion 31b, and the third portion 32c of the shaft 31, respectively. Each of the first portion 31a, the second portion 31b, and the third portion 31c of the shaft 31 and the first portion 32a, the second portion 32b, and the third portion 32c of the elastic body 32 corresponds to a corresponding one of the first portion 30a, the second portion 30b, and the third portion 30c of the upper roll 30.

The shaft 31 has a diameter that varies in the length direction. In this embodiment, a diameter of the first portion 31a is approximately constant in the axial direction. A diameter of the second portion 31b gradually reduces toward the outer side in the axial direction. In other words, the second portion 31b is inclined such that the diameter reduces toward the outer side in the axial direction. A diameter of the third portion 31c is approximately constant in the axial direction. Therefore, the diameter of the first portion 31a is larger than the diameters of the second portion 31b and the third portion 31c.

The elastic body 32 has a thickness that varies in the length direction. In this embodiment, a thickness of the first portion 32a is approximately constant in the axial direction. The thickness of the first portion 32a can be about the same as a thickness of the elastic body 37 of the lower roll 35. A thickness of the second portion 32b gradually increases toward the outer side in the axial direction. In other words, (an inner circumferential surface of) the second portion 32b is inclined such that the thickness increases toward the outer side in the axial direction. In this embodiment, a thickness of the inner circumferential surface of the second portion 32b increases toward the outer side in the axial direction. A thickness of the third portion 32c is approximately constant in the axial direction. Therefore, the thickness of the first portion 32a is smaller than the thicknesses of the second portion 32b and the third portion 32c. Since, in the second portion 32b, the thickness of the elastic body 32 gradually increases toward the outer side in the axial direction, stretch of the non-coated portion 12a can be easily adjusted in the width direction.

Although not particularly limited, the thickness of the elastic body 32 can be set to about 5 mm or more and 20 mm or less (for example, about 8 mm or more and 16 mm or less) in all of the first portion 32a to the third portion 32c.

In the second portion 32b, the elastic body 32 may be inclined at an angle of 10 degrees or more and 25 degrees or less (for example, about 12 degrees or more and 20 degrees or less) such that the thickness increases from an end portion of the first portion 32a toward the outer side in the axial direction. Similarly, the second portion 31b of the shaft 31 is inclined at an angle corresponding to the second portion 32b of the elastic body 32 such that the diameter of the second portion 31b reduces from an end portion of the first portion 31a toward the outer side in the axial direction. Note that there is no particular limitation on the angle of inclination of the elastic body 32 in the second portion 32b.

The thickness of the elastic body 32 in the third portion 32c can be set to 1.3 times the thickness of the elastic body 32 in the first portion 32a or more and 2.0 time the thickness of the elastic body 32 in the first portion 32a or less. The thickness of the third portion 32c of the elastic body 32 may be set to, for example, 1.4 times the thickness of the first portion 32a or more and 1.8 times the thickness of the first portion 32a or less.

Herein, a length Y1 of the first portion 30a is larger than a width C1+ X1, the width extending from the inner end portion 30d of the upper roll 30 to the outer end of the boundary portion 12d (the protective film 12c). Therefore, the first portion 30a covers the boundary portion 12d. The inner end portion of the first portion 30a reaches a more inner side than an inner end portion of the boundary portion 12d and the outer end portion of the first portion 30a reaches a more outer side than an outer end portion of the boundary portion 12d. In other words, the first portion 30a is set to a position and a dimension with which the first portion 30a covers the boundary portion 12d. Therefore, the boundary portion 12d is pressurized by the first portion 30a.

A length Y2 of the second portion 30b is smaller than a width X2 of the non-coated portion 12a. Herein, when the protective film 12c is formed on the electrode sheet 10, the width X2 of the non-coated portion 12a is a width from an outer end portion of the protective film 12c to an outer end portion of the electrode sheet 10. When the protective film 12c is not formed on the electrode sheet 10, the width X2 of the non-coated portion 12a is a width from an outer end portion of the electrode active material layer 14 to the outer end portion of the electrode sheet 10. The second portion 30b overlaps with a portion of the non-coated portion 12a. A position and a dimension of the second portion 30b may be set to be within the width X2 of the non-coated portion 12a. Thus, the non-coated portion 12a is pressed by the first portion 30a, the second portion 30b, and the third portion 30c.

A length Y1 + Y2 obtained by combining the first portion 30a and the second portion 30b is 0.6 times a width C1 + X1 + X2 along which the electrode sheet 10 and the upper roll 30 overlap with each other or more and 0.85 times the width C1 + X1 + X2 or less (for example, 0.65 times the width C1 + X1 + X2 or more and 0.8 times the width C1 + X1 + X2 or less). In this embodiment, the inner end portion 30d of the upper roll 30 is set at a position that overlaps with the coated portion 12b. Therefore, the width along which the electrode sheet 10 and the upper roll 30 overlap with each other is larger than the width of the non-coated portion 12a including the boundary portion 12d.

In this embodiment, a length Y3 along which the upper roll 30 is pressed against the lower roll 35 is 1.2 times a width X1 + X2 along which the non-formed portion 12a is pressed by the pair of rubber rolls 30 and 35 (a width along which the pair of rubber rolls 30 and 35 presses the non-formed portion 12a) or more and 2.1 times the width X1 + X2 or less (for example, 1.6 times the width X1 + X2 or more and 2.0 times the width X1 + X2 or less). Thus, the outer end portion of the non-formed portion 12a is pressed by a portion of the upper roll 30 extending from an approximately central portion an outer side portion.

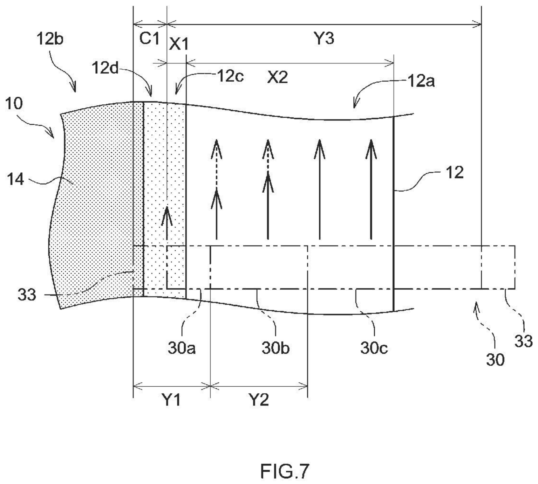

FIG. 7 is a schematic view illustrating stretch of the electrode sheet 10 that is roll-pressed in the first pressing step S6a. In FIG. 7, a plan view of the electrode sheet 10 is schematically illustrated. Stretch of the electrode sheet 10 is expressed by arrows and a portion where stretch is larger is expressed by a longer arrow. In the plan view of the electrode sheet 10, a position where the electrode sheet 10 is pressed by the upper roll 30 is expressed by a two-dot chain line. Note that, in FIG. 7, stretch of the electrode sheet 10 is merely illustrated virtually and a size relation of stretch of the electrode sheet 10 in each portion is not necessarily as illustrated in FIG. 7.

In a trial conducted by the present inventors, as illustrated in FIG. 7, in each of portions of the upper roll 30 that have about the same thickness, stretch of the non-coated portion 12a is larger as closer to center of the portion (expressed by solid arrows). Furthermore, in a portion that has been roll-pressed by a portion (for example, the first portion 30a) in which the elastic body 32 of the upper roll 30 is thinner, stretch of the non-coated portion 12a is larger (expressed by broken-lined arrows). Note that the current collector 12 is difficult to be stretched in the boundary portion 12d (or a portion on which the protective film 12c is formed) near the electrode active material layer 14, as described above. In the protective film 12c, there are portions in which the protective film 12c is not pressed by the upper roll 30. In this embodiment, since the end portions 33 are chamfered, only a portion of the boundary portion 12d is roll-pressed. Therefore, stretch of the boundary portion 12d of the non-coated portion 12a is very small.

In the embodiment described above, the combined length Y1 + Y2 of the first portion 30a and the second portion 30b is set to 0.6 times the width C1 + X1 + X2 along which the electrode sheet 10 and the upper roll 30 overlap or more. Thus, the outer end portion of the non-coated portion 12a can be pressed by the third portion 30c in which the thickness of the elastic body 32 is about the same as those of most of the other portions. A central portion of the non-coated portion 12a can be pressed by the second portion 30b in which the thickness of the elastic body 32 is smaller. A portion pressed by the third portion 30c is adjusted to be in a proper range and stretch of the central portion of the non-coated portion 12a can be easily adjusted to be about the same as that of the outer end portion.

In the embodiment described above, the combined length Y1 + Y2 of the first portion 30a and the second portion 30b is set to 0.85 times the width C1 + X1 + X2 along which the electrode sheet 10 and the upper roll 30 overlap with each other or less. Thus, the thickness of the elastic body 32 in the third portion 30c that presses the outer end portion of the non-coated portion 12a is less likely to be larger than necessary. As a result, stretch of the outer end portion of the non-coated portion 12a that is pressed by the third portion 30c can be easily maintained.

In the embodiment described above, the length Y3 along which the upper roll 30 is pressed against the lower roll 35 is 1.2 times the width X1 + X2 along which the non-formed portion 12a is pressed by the pair of rubber rolls 30 and 35 or more and 2.1 times the width X1 + X2 or less. Thus, the outer end portion of the non-coated portion 12a is easily pressed by around a central portion of the third portion 30c of the upper roll 30. Since the outer end portion of the non-coated portion 12a is pressed by around the central portion of the third portion 30c in which the thickness of the elastic body 32 is large, stretch can be easily maintained. As a result, stretch of the outer end portion of the non-coated portion 12a and stretch of the central portion are likely to be about the same.

In the embodiment described above, in the second portion 32b, the elastic body 32 is inclined at an angle of 10 degrees or more such that thickness of the elastic body 32 increases from the end portion of the first portion 32a to the outer side in the axial direction. Thus, a difference in thickness between the first portion 30a and the third portion 30c can be large. Thus, in the first pressing step S6a, stretch of and around the boundary portion 12d of the non-coated portion 12a that is pressed by the first portion 30a can be easily caused to be relatively large. Thus, the boundary portion 12d of the non-coated portion 12a and therearound can be locally stretched in the stepped roll pressing step S6c. As a result, the non-coated portion 12a of the electrode sheet 10 can be easily stretched uniformly as a whole.

In the embodiment described above, in the second portion 32b, the elastic body 32 is inclined at an angle of 25 degrees or less such that the thickness of the elastic body 32 increases from the end portion of the first portion 32a toward the outer side in the axial direction. Thus, in the electrode sheet 10, a difference in stress distribution is less likely to be large near a portion of the electrode sheet 10 that is pressed by the second portion 30b. As a result, damage of the electrode sheet 10 is likely to be suppressed.

In the embodiment described above, the thickness of the elastic body 32 in the third portion 32c is set to 1.3 times the thickness of the elastic body 32 in the first portion 32a or more. Thus, a difference in stretch between the boundary portion 12d of the non-coated portion 12a and the outer end portion of the non-coated portion 12a is less likely to be excessively large. Thus, in stretching the boundary portion 12d of the non-coated portion 12a in the stepped roll pressing step S6c, there is no problem even when a tension applied to the boundary portion 12d of the non-coated portion 12a is small. As a result, damage of the electrode sheet 10 in the stepped roll pressing step S6c is likely to be suppressed.

In this embodiment described above, the thickness of the elastic body 32 in the third portion 32c is set to 2.0 times the thickness of the elastic body 32 in the first portion 32a or less. Thus, stretch of the boundary portion 12d of the non-coated portion 12a is likely to be properly suppressed small. Therefore, in the second pressing step S6b, stretch of the boundary portion 12d near the electrode active material layer 14 of the electrode sheet 10 can be properly suppressed small. As a result, when the electrode sheet 10 is sandwiched between the pair of rolls 41 and 42 in the second pressing step S6b, the boundary portion 12d is less likely to swing up and down. Because swing of the boundary portion 12d is suppressed, concerns over damage of the rolls 41 and 42, rupture of the boundary portion 12d, or the like due to the pair of rolls 41 and 42 engaging with the boundary portion 12d can be reduced.

As illustrated in FIG. 4, the electrode sheet 10 roll-pressed by the first press device 104 is put on the tension roll 61 and the guide rolls 54 and 55 and is conveyed to the second press device 106. The tension roll 61 is configured to adjust a tension applied to the electrode sheet 10 between the first press device 104 and the second press device 106. The tension applied to the electrode sheet 10 between the first press device 104 and the second press device 106 is controlled by a controller 110. The controller 110 is configured to control the tension applied to the electrode sheet 10 for each place on the conveyance path W1.

### <Second Press Device 106>

The second press device 106 is arranged at a downstream side of the first press device 104 on the conveyance path W1. The second press device 106 is a device that roll-presses the electrode active material layer 14. The second press device 106 includes the pair of rolls (rolling rolls) 41 and 42. Each of the pair of rolls 41 and 42 is an approximately columnar roll and extends along a width direction of the electrode active material layer 14 of the electrode sheet 10. In the second press device 106, the pair of rolls 41 and 42 are configured to rotate by unillustrated driving device that rotate and drive the rolls 41 and 42. The pair of rolls 41 and 42 are rotated and driven in a state where the rolls 41 and 42 are in contact with each other and the electrode sheet 10 is caused to pass therebetween. At that time, the coated portion 12b of the electrode sheet 10 is stretched along the conveyance direction.

The electrode sheet 10 roll-pressed by the second press device 106 is conveyed to the stepped roll pressing device 108. The electrode sheet 10 may be conveyed to the stepped roll pressing device 108 as being put on the guide rolls.

### <Stepped Roll Pressing Device 108>

The stepped roll pressing device 108 is a device that is arranged on the conveyance path W1 and presses the stepped roll 50 against the electrode sheet 10. A specific example of a shape of the stepped roll 50 is as described above. In the stepped roll pressing device 108, as illustrated in FIG. 6, the step 51a is provided to correspond to the boundary portion 12d of the non-coated portion 12a of the electrode sheet 10 that is a boundary with the electrode active material layer 14. Furthermore, the diameter of the portion 52 that contacts the non-coated portion 12a is larger than the diameter of the portion 53 that contacts the electrode active material layer 14. In the stepped roll pressing device 108, the position of the electrode sheet 10 is adjusted and the electrode sheet 10 is conveyed such that the position of the boundary portion 12d of the non-coated portion 12a that is the boundary with the electrode active material layer 14 corresponds to the step 51a of the stepped roll 50. Therefore, the stepped roll pressing device 108 may include a position adjustment device (not illustrated) that adjusts the position of the electrode sheet 10 before the stepped roll 50.

As described above, in the stepped roll pressing device 108, the portion 51 in which the step 51a of the stepped roll 50 is provided is conveyed while being pressed against the boundary portion 12d of the non-coated portion 12a of the electrode sheet 10 that is the boundary with the electrode active material layer 14. Herein, the stepped roll pressing device 108 is arranged at a downstream side of the first press device 104 that stretches the non-coated portion 12a (the second pressing step S6b) and the second press device 106 that stretches the coated portion 12b (the second pressing step S6b). In the electrode sheet 10, after the non-coated portion 12a and the coated portion 12b are stretched, the boundary portion 12d of the non-coated portion 12a that is the boundary with the electrode active material layer 14 is stretched by the step 51a of the stepped roll 50. In the stepped roll 50, the diameter of the portion 52 that contacts the non-coated portion 12a is larger than the diameter of the portion 53 that contacts the electrode active material layer 14.

Therefore, in a state where the non-coated portion 12a and the electrode active material layer 14 that have been already stretched by the first press device 104 are supported by the stepped roll 50, as appropriate, the boundary portion 12d of the non-coated portion 12a that is the boundary with the electrode active material layer 14 is pressed against the step 51a of the stepped roll 50 and is thus corrected. Therefore, when the electrode sheet 10 is pressed against the stepped roll 50, the electrode sheet 10 is less likely to be raptured.

The tension roll 62 and the guide rolls 58 and 59 are provided at a downstream side of the stepped roll pressing device 108. The tension roll 62 is configured to adjust a tension applied to the electrode sheet 10 at the downstream side of the second press device 106. The tension applied to the electrode sheet 10 at the downstream side of the second press device 106 is controlled by the controller 110.

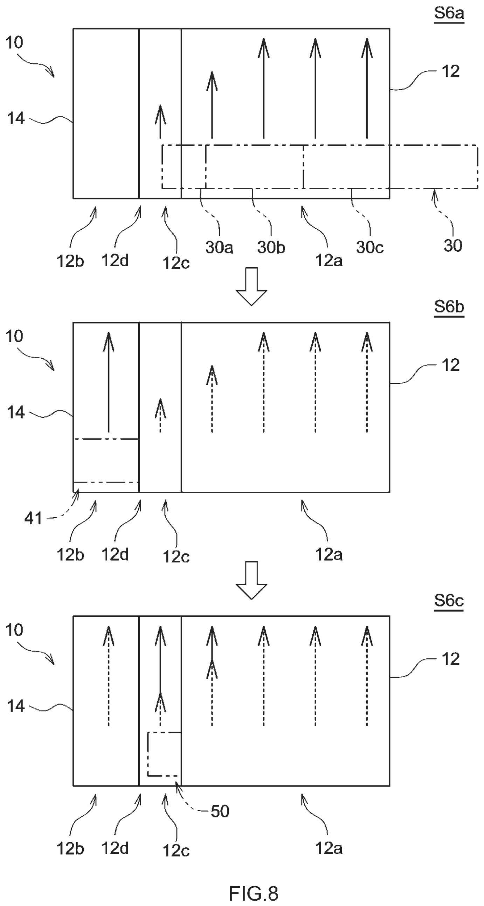

FIG. 8 is a schematic view illustrating stretch of the current collector 12. In FIG. 8, stretch of the electrode sheet 10 in each of the first pressing step S6a, the second pressing step S6b, and the stepped roll pressing step S6c is expressed by a solid arrow. In FIG. 8, a portion of the stretch of the electrode sheet 10 that has been stretched by a corresponding one of the steps described above is expressed by a broken-lined arrow. Note that, in FIG. 8, stretch of the electrode sheet 10 is merely illustrated virtually and a size relation of stretch of the electrode sheet 10 in each portion is not necessarily as illustrated in FIG. 8. As illustrated in FIG. 8, in the electrode sheet 10, the non-coated portion 12a is first stretched by the first pressing step S6a. Thereafter, the coated portion 12b is further stretched by the second pressing step S6b. Then, the current collector 12 in the boundary portion 12d of the non-coated portion 12a that is the boundary of the electrode active material layer 14 is stretched by the stepped roll pressing step S6c. In this case. The non-coated portion 12a is stretched by the first pressing step S6a and the coated portion 12b is stretched by the second pressing step S6b. Thereafter, the boundary portion 12d of the non-coated portion 12a that is the boundary with the electrode active material layer 14 is locally stretched by the stepped roll pressing step S6c. Therefore, wrinkles due to a difference in stretching rate of the current collector 12 between the boundary portion 12d of the non-coated portion 12a that is the boundary with the electrode active material layer 14 and the other portions 12a and 12b are suppressed and wrinkles in the electrode sheet 10 as a whole are suppressed. Note that, in a portion of the non-coated portion 12a near the protective film 12c (the boundary portion 12d), stretch achieved by the first pressing step S6a is insufficient in some cases, as compared to the portion extending from the center to the outer side. In this embodiment, adjustment is made such that a portion (the first portion 30a) of the rubber roll 30 in which the thickness of the elastic body 32 is thin partially overlaps with a portion near the protective film 12c (see FIG. 5). Therefore, in the stepped roll pressing step S6c, the non-coated portion 12a near the protective film 12c described above is supplementarily stretched. As a result, wrinkles in the electrode sheet 10 as a whole are more likely to be suppressed.

Herein, in processing (the first pressing step S6a) of stretching the non-coated portion 12a, as described above, for example, processing using EPS may be performed. As described above, in EPS, it is difficult to stretch the current collector 12 in the boundary portion 12d of the non-coated portion 12a that is the boundary with the electrode active material layer 14. In the method for manufacturing an electrode sheet and the electrode sheet manufacturing device 1 proposed herein, the current collector 12 in the boundary portion 12d of the non-coated portion 12a that is the boundary with the electrode active material layer 14 is stretched by the stepped roll 50.

Since the boundary portion 12d is pressed against the step 51a of the stepped roll 50 and is stretched, even when the protective film 12c is provided in the boundary portion 12d of the non-coated portion 12a that is the boundary with the electrode active material layer 14, the boundary portion 12d is properly stretched.

According to the trial conducted by the present inventors, also when the non-coated portion is stretched using the EPS device, the boundary portion (or the portion on which the protective film is formed) is difficult to be stretched. Herein, the electrode sheet manufacturing device 1 includes the conveyance device 102, the first press device 104, the second press device 106, and the stepped roll pressing device 108. The first press device 104 is arranged on the conveyance path W1. The first press device 104 is a device that roll-presses the non-formed portion 12a of the electrode sheet 10 by the pair of rubber rolls 30 and 35. The second press device 106 is a device that is arranged at the downstream side of the first press device 104 on the conveyance path W1 and roll-presses the electrode active material layer 14. The stepped roll pressing device 108 is a device that is arranged at the downstream side of the second press device 106 on the conveyance path W1 and presses the stepped roll 50 against the non-formed portion 12a of the electrode sheet 10 to apply a tension thereto. The upper roll 30 of the pair of rubber rolls 30 and 35 includes the shaft 31 and the elastic body 32 wound around the shaft 31. In the upper roll 30, the diameter of the shaft 31 in the portion (in this embodiment, the first portion 30a) that presses the boundary portion 12d that is the boundary between the non-formed portion 12a and the electrode active material layer 14 is larger than the diameter of the shaft 31 in the portion (in this embodiment, the second portion 30b and the third portion 30c) that presses the more outer side than the boundary portion 12d. The thickness of the elastic body 32 in the portion that presses the boundary portion 12d is smaller than the thickness of the elastic body 32 in the portion that presses the more outer side than the boundary portion 12d.

According to the electrode sheet manufacturing device 1 described above, in the portion that presses the boundary portion 12d, the diameter of the shaft 31 is large and the thickness of the elastic body 32 is small. Thus, in the first press device 104, the boundary portion 12d that is difficult to be stretched by a normal EPS device can be easily stretched along the conveyance direction. Furthermore, the electrode active material layer 14 is pressed by the second press device 106 and the coated portion 12b is stretched. Thereafter, the boundary portion 12d is further stretched by the stepped roll pressing device 108. Thus, stretch of the entire current collector 12 is likely to be uniform. As a result, tabs can be easily processed properly in a later step. Moreover, damage of the electrode sheet 10 that can be caused because stretch of the current collector 12 is nonuniform in the width direction is likely to be prevented.

Note that, although the upper roll 30 has a configuration described above, the upper roll 30 is not limited thereto. The configuration of the upper roll 30 described above may be provided in the lower roll 35. The configuration of the upper roll 30 described above may be provided in both the upper roll 30 and the lower roll 35. Moreover, the configuration of the upper roll 30 described above may be provided in the lower roll 35 and a configuration of the lower roll 35 described above may be provided in the upper roll. In other words, the upper roll 30 and the lower roll 35 described above may be provided so as to be inverted vertically.

In a finding of the present inventors, in order to stretch the boundary portion, it is necessary to increase a press pressure of the EPS device or increase a tension applied to the electrode sheet at front and behind the EPS device. However, when the press pressure of the EPS device is increased, a friction force of the pair of rubber rolls that form the EPS device is increased and also a change amount is increased. As a result, heat is likely to be applied to the pair of rubber rolls and the rubber rolls are easily deteriorated. Moreover, in the finding of the present inventors, when the stepped roll is pressed against the non-coated portion in order to locally stretch the boundary portion, rapture of the electrode sheet is likely to occur.

Herein, the tension applied to the non-coated portion 12a when the stepped roll 50 is pressed against the non-coated portion 12a is set to a smaller tension than the tension applied to the non-coated portion 12a at front and behind the pair of rubber rolls 30 and 35. The electrode sheet 10 is set to a relatively high value at front and behind the pair of rubber rolls 30 and 35 that form the first press device 104 (the EPS deice). Thus, the boundary portion 12d of the non-coated portion 12a is stretched. Since the boundary portion 12d of the non-coated portion 12a is stretched, even when the tension applied to the non-coated portion 12a is reduced in pressing the stepped roll 50 against the non-coated portion 12a, stretch of the boundary portion 12d can be properly adjusted. Moreover, by reducing the tension applied to the non-coated portion 12a in pressing the stepped roll 50 against the non-coated portion 12a, the non-coated portion 12a is made less likely to be damaged and a risk of the electrode sheet 10 can be reduced.

The technology disclosed herein has been described above in various forms. However, the embodiments described above or the like shall not limit the present disclosure, unless specifically stated otherwise. Various changes can be made to the technology disclosed herein, and each of components and processes described herein can be omitted as appropriate or can be combined with another one or other ones of the components and the processes as appropriate, unless a particular problem occurs. The present specification includes disclosure set forth in the following items.

First Item: An electrode sheet manufacturing device that manufactures an electrode sheet including a current collector formed of a long metal foil, a non-formed portion set along a length direction in a preset position of the current collector in a width direction, and an electrode active material layer formed in a portion of the current collector excluding the non-formed portion, the electrode sheet manufacturing device including a conveyance device that conveys the electrode sheet along a preset conveyance path, a first press device that is arranged on the conveyance path and roll-presses the non-formed portion of the electrode sheet by a pair of rubber rolls, a second press device that is arranged at a downstream side of the first press device on the conveyance path and roll-presses the electrode active material layer, and a stepped roll pressing device that is arranged at a downstream side of the second press device on the conveyance path and presses a stepped roll against the non-formed portion of the electrode sheet to apply a tension thereto, in which the stepped roll includes a step in a portion thereof that contacts a boundary portion of the non-formed portion that is a boundary with the electrode active material layer and a diameter of a portion thereof that contacts the non-formed portion is larger than a diameter of a portion thereof that contacts the electrode active material layer, at least one of the pair of rubber rolls includes a shaft and an elastic body wound around the shaft, in the at least one of the pair of rubber rolls, a diameter of the shaft in a portion thereof that presses the boundary portion between the non-formed portion and the electrode active material layer is larger than a diameter of the shaft in a portion thereof that presses a more outer side than the boundary portion, and a thickness of the elastic body in the portion thereof that presses the boundary portion is smaller than a thickness of the elastic body in the portion thereof that presses the more outer side than the boundary portion.

Second Item: The electrode sheet manufacturing device according to the first item, in which the tension applied to the non-formed portion when the stepped roll is pressed against the non-formed portion is smaller than a tension applied to the non-formed portion at front and behind the pair of the rubber roll.

Third Item: The electrode sheet manufacturing device according to the first or second item, in which the at least one of the pair of rubber rolls includes a first portion that presses the boundary portion, and a second portion and a third portion that press the more outer portion than the boundary portion, in the first portion, the thickness of the elastic body is constant, in the second portion, the thickness of the elastic body gradually increases from an end portion of the first portion toward an outer side in an axial direction, and in the third portion, the thickness of the elastic body is constant from an end portion of the second portion toward the outer side in the axial direction.

Fourth Item: The electrode sheet manufacturing device according to the third item, in which the at least one of the pair of rubber rolls is arranged in a position where an inner end portion thereof corresponds to an end portion of the electrode active material layer, the first portion covers the boundary portion, a length of the second portion is smaller than a width of the non-formed portion, and a combined length of the first portion and the second portion is 0.6 times a width along which the electrode sheet and the at least one of the pair of rubber rolls overlap or more and 0.85 times the width or less.

Fifth Item: The electrode sheet manufacturing device according to the third or fourth item, in which a length along which the at least one of the pair of rubber rolls is pressed against at least one of the electrode sheet and the other one of the pair of rubber rolls is 1.2 times a width along which the non-formed portion is pressed by the pair of rubber rolls or more and 2.1 times the width or less.

Sixth Item: The electrode sheet manufacturing device according to the fifth item, in which in the second portion, the elastic body is inclined at an angle of 10 degrees or more and 25 degrees or less such that the thickness thereof increases from the end portion of the first portion toward the outer side in the axial direction.

Seventh Item: The electrode sheet manufacturing device according to the fifth or sixth item, in which the thickness of the elastic body in the third portion is 1.3 times the thickness of the elastic body in the first portion or more and 2.0 times the thickness of the elastic body in the first portion or less.

Eighth Item: A method for manufacturing an electrode sheet including a current collector formed of a long metal foil, a non-formed portion set along a length direction in a preset position of the current collector in a width direction, and an electrode active material layer formed in a portion of the current collector excluding the non-formed portion, the method including a first pressing step of roll-pressing the non-formed portion of the electrode sheet by a pair of rubber rolls while conveying the electrode sheet along a preset conveyance path, a second pressing step of roll-pressing the electrode active material layer after the first pressing step, and a stepped roll pressing step of pressing a stepped roll against the non-formed portion of the electrode sheet to apply a tension thereto after the first pressing step, in which the stepped roll includes a step in a portion thereof that contacts a boundary portion of the non-formed portion that is a boundary with the electrode active material layer and a diameter of a portion thereof that contacts the non-formed portion is larger than a diameter of a portion thereof that contacts the electrode active material layer, at least one of the pair of rubber rolls includes a shaft and an elastic body wound around the shaft, in the at least one of the pair of rubber rolls, a diameter of the shaft in a portion thereof that presses the boundary portion between the non-formed portion and the electrode active material layer is larger than a diameter of the shaft in a portion thereof that presses a more outer side than the boundary portion, and a thickness of the elastic body in the portion thereof that presses the boundary portion is smaller than a thickness of the elastic body in the portion thereof that presses the more outer side than the boundary portion.

Ninth Item: The method for manufacturing an electrode sheet according to the eighth item, in which in the stepped roll pressing step, the tension applied to the non-formed portion when the stepped roll is pressed against the non-formed portion is caused to be smaller than a tension applied to the non-formed portion at front and behind the pair of the rubber roll.

Tenth Item: The method for manufacturing an electrode sheet according to the eighth or ninth item, in which the at least one of the pair of rubber rolls includes a first portion that presses the boundary portion, and a second portion and a third portion that press the more outer portion than the boundary portion, in the first portion, the thickness of the elastic body is constant, in the second portion, the thickness of the elastic body gradually increases from an end portion of the first portion toward an outer side in an axial direction, and in the third portion, the thickness of the elastic body is constant from an end portion of the second portion toward the outer side in the axial direction.

Eleventh Item: The method for manufacturing an electrode sheet according to the tenth, in which the at least one of the pair of rubber rolls is arranged in a position where an inner end portion thereof corresponds to an end portion of the electrode active material layer, the first portion covers the boundary portion, a length of the second portion is smaller than a width of the non-formed portion, and a combined length of the first portion and the second portion is 0.6 times a width along which the electrode sheet and the at least one of the pair of rubber rolls overlap or more and 0.85 times the width or less.

Twelfth Item: The method for manufacturing an electrode sheet according to the tenth or eleventh item, in which a length along which at least the at least one of the pair of rubber rolls is pressed against at least one of the electrode sheet and the other one of the pair of rubber rolls is 1.2 times a width along which the non-formed portion is pressed by the pair of rubber rolls or more and 2.1 times the width or less.

Thirteenth Item: The method for manufacturing an electrode sheet according to the twelfth item, in which in the second portion, the elastic body is inclined at an angle of 10 degrees or more and 25 degrees or less such that the thickness thereof increases from the end portion of the first portion toward the outer side in the axial direction.

Fourteenth Item: The method for manufacturing an electrode sheet according to the twelfth or thirteenth item, in which the thickness of the elastic body in the third portion is 1.3 times the thickness of the elastic body in the first portion or more and 2.0 times the thickness of the elastic body in the first portion or less.

## Claims

1. An electrode sheet manufacturing device (1) that manufactures an electrode sheet (10) including a current collector (12) formed of a long metal foil, a non-formed portion (12a) set along a length direction in a preset position of the current collector (12) in a width direction, and an electrode active material layer (14) formed in a portion of the current collector (12) excluding the non-formed portion (12a), the electrode sheet manufacturing device (1) comprising:
a conveyance device (102) that conveys the electrode sheet (10) along a preset conveyance path (W1);
a first press device (104) that is arranged on the conveyance path (W1) and roll-presses the non-formed portion (12a) of the electrode sheet (10) by a pair of rubber rolls (30,35);
a second press device (106) that is arranged at a downstream side of the first press device (104) on the conveyance path (W1) and roll-presses the electrode active material layer (14); and
a stepped roll pressing device (108) that is arranged at a downstream side of the second press device (106) on the conveyance path (W1) and presses a stepped roll (50) against the non-formed portion (12a) of the electrode sheet (10) to apply a tension thereto,
wherein
the stepped roll (50) includes a step (51a) in a portion thereof that contacts a boundary portion (12d) of the non-formed portion (12a) that is a boundary with the electrode active material layer (14) and a diameter of a portion (52) thereof that contacts the non-formed portion (12a) is larger than a diameter of a portion (53) thereof that contacts the electrode active material layer (14),
at least one of the pair of rubber rolls (30) includes a shaft (31,36) and an elastic body (32,37) wound around the shaft (31,36),
in the at least one of the pair of rubber rolls (30),
a diameter of the shaft (31) in a portion thereof that presses the boundary portion (12d) between the non-formed portion (12a) and the electrode active material layer (14) is larger than a diameter of the shaft (31) in a portion thereof that presses a more outer side than the boundary portion (12d), and
a thickness of the elastic body (32,37) in the portion thereof that presses the boundary portion (12d) is smaller than a thickness of the elastic body (32,37) in the portion thereof that presses the more outer side than the boundary portion (12d).

2. The electrode sheet manufacturing device (1) according to claim 1, wherein
the tension applied to the non-formed portion (12a) when the stepped roll (50) is pressed against the non-formed portion (12a) is smaller than a tension applied to the non-formed portion (12a) at front and behind the pair of the rubber roll.

3. The electrode sheet manufacturing device (1) according to claim 1 or 2, wherein
the at least one of the pair of rubber rolls (30) includes
a first portion (30a) that presses the boundary portion (12d), and
a second portion (30b) and a third portion (30c) that press the more outer portion than the boundary portion (12d),
in the first portion (30a), the thickness of the elastic body (32) is constant,
in the second portion (30b), the thickness of the elastic body (32) gradually increases from an end portion of the first portion (30a) toward an outer side in an axial direction, and
in the third portion (30c), the thickness of the elastic body (32) is constant from an end portion of the second portion (30b) toward the outer side in the axial direction.

4. The electrode sheet manufacturing device (1) according to claim 3, wherein
the at least one of the pair of rubber rolls (30) is arranged in a position where an inner end portion thereof corresponds to an end portion of the electrode active material layer (14),
the first portion (30a) covers the boundary portion (12d),
a length (Y2) of the second portion (30b) is smaller than a width of the non-formed portion (12a), and
a combined length (Y1+Y2) of the first portion (30a) and the second portion (30b) is 0.6 times a width (C1+X1+X2) along which the electrode sheet (10) and the at least one of the pair of rubber rolls (30) overlap or more and 0.85 times the width or less.

5. The electrode sheet manufacturing device (1) according to claim 3, wherein
a length (Y3) along which the at least one of the pair of rubber rolls (30) is pressed against at least one of the electrode sheet (10) and the other one of the pair of rubber rolls (30,35) is 1.2 times a width (X1+X2) along which the non-formed portion (12a) is pressed by the pair of rubber rolls (30,35) or more and 2.1 times the width or less.

6. The electrode sheet manufacturing device (1) according to claim 5, wherein
in the second portion (30b), the elastic body (32) is inclined at an angle of 10 degrees or more and 25 degrees or less such that the thickness thereof increases from the end portion of the first portion (30a) toward the outer side in the axial direction.

7. The electrode sheet manufacturing device (1) according to claim 5, wherein
the thickness of the elastic body (32) in the third portion (30c) is 1.3 times the thickness of the elastic body (32) in the first portion (30a) or more and 2.0 times the thickness of the elastic body (32) in the first portion (30a) or less.

8. A method for manufacturing an electrode sheet (10) including a current collector (12) formed of a long metal foil, a non-formed portion (12a) set along a length direction in a preset position of the current collector (12) in a width direction, and an electrode active material layer (14) formed in a portion of the current collector (12) excluding the non-formed portion (12a), the method comprising:
a first pressing step of roll-pressing the non-formed portion (12a) of the electrode sheet (10) by a pair of rubber rolls (30,35) while conveying the electrode sheet (10) along a preset conveyance path (W1);
a second pressing step of roll-pressing the electrode active material layer (14) after the first pressing step; and
a stepped roll pressing step of pressing a stepped roll (50) against the non-formed portion (12a) of the electrode sheet (10) to apply a tension thereto after the first pressing step,
wherein
the stepped roll (50) includes a step (51a) in a portion thereof that contacts a boundary portion (12d) of the non-formed portion (12a) that is a boundary with the electrode active material layer (14) and a diameter of a portion (52) thereof that contacts the non-formed portion (12a) is larger than a diameter of a portion (53) thereof that contacts the electrode active material layer (14),
at least one of the pair of rubber rolls (30) includes a shaft (31,36) and an elastic body (32,37) wound around the shaft (31,36),
in the at least one of the pair of rubber rolls (30),
a diameter of the shaft (31) in a portion thereof that presses the boundary portion (12d) between the non-formed portion (12a) and the electrode active material layer (14) is larger than a diameter of the shaft (31) in a portion thereof that presses a more outer side than the boundary portion (12d), and
a thickness of the elastic body (32) in the portion thereof that presses the boundary portion (12d) is smaller than a thickness of the elastic body (32) in the portion thereof that presses the more outer side than the boundary portion (12d).

9. The method for manufacturing an electrode sheet (10) according to claim 8, wherein
in the stepped roll pressing step, the tension applied to the non-formed portion (12a) when the stepped roll (50) is pressed against the non-formed portion (12a) is caused to be smaller than a tension applied to the non-formed portion (12a) at front and behind the pair of the rubber roll.

10. The method for manufacturing an electrode sheet (10) according to claim 8 or 9, wherein
the at least one of the pair of rubber rolls (30) includes
a first portion (30a) that presses the boundary portion (12d), and
a second portion (30b) and a third portion (30c) that press the more outer portion than the boundary portion (12d),
in the first portion (30a), the thickness of the elastic body (32) is constant,
in the second portion (30b), the thickness of the elastic body (32) gradually increases from an end portion of the first portion (30a) toward an outer side in an axial direction, and
in the third portion (30c), the thickness of the elastic body (32) is constant from an end portion of the second portion (30b) toward the outer side in the axial direction.

11. The method for manufacturing an electrode sheet (10) according to claim 10, wherein
the at least one of the pair of rubber rolls (30) is arranged in a position where an inner end portion thereof corresponds to an end portion of the electrode active material layer (14),
the first portion (30a) covers the boundary portion (12d),
a length (Y2) of the second portion (30b) is smaller than a width of the non-formed portion (12a), and
a combined length (Y1+Y2) of the first portion (30a) and the second portion (30b) is 0.6 times a width (C1+X1+X2) along which the electrode sheet (10) and the at least one of the pair of rubber rolls (30) overlap or more and 0.85 times the width or less.

12. The method for manufacturing an electrode sheet (10) according to claim 10,
wherein
a length (Y3) along which the at least one of the pair of rubber rolls (30) is pressed against at least one of the electrode sheet (10) and the other one of the pair of rubber rolls (30,35) is 1.2 times a width (X1+X2) along which the non-formed portion (12a) is pressed by the pair of rubber rolls (30,35) or more and 2.1 times the width or less.

13. The method for manufacturing an electrode sheet (10) according to claim 12, wherein
in the second portion (30b), the elastic body (32) is inclined at an angle of 10 degrees or more and 25 degrees or less such that the thickness thereof increases from the end portion of the first portion (30a) toward the outer side in the axial direction.

14. The method for manufacturing an electrode sheet (10) according to claim 12, wherein
the thickness of the elastic body (32) in the third portion (30c) is 1.3 times the thickness of the elastic body (32) in the first portion (30a) or more and 2.0 times the thickness of the elastic body (32) in the first portion (30a) or less.
